# EUROPEAN PATENT SPECIFICATION

(11) **EP 3 741 271 B1**
(45) Date of publication and mention of the grant of the patent: **14.09.2022**
(21) Application number: 19740763.8
(22) Date of filing: 15.01.2019
(51) Int. Cl.: A47J 42/06, B02C 13/14, A47J 42/08, A47J 42/18

(54) **COFFEE BEAN GRINDING MECHANISM**
KAFFEEBOHNENMAHLWERK
MÉCANISME DE MOUTURE DE GRAINS DE CAFÉ

(30) Priority: 19.01.2018 JP 2018007412
(43) Date of publication of application: 25.11.2020
(73) Proprietor: Three Peace Co., Ltd., Tokyo 110-0015 (JP); TOK, Inc., Tokyo 174-8501 (JP)
(72) Inventor: NISHIYAMA Hironobu, Tokyo 110-0015 (JP); UZUKA Kazuo, Tokyo 174-8501 (JP)
(74) Representative: Tetzner, Michael
(86) International application number: PCT/JP2019/000845
(87) International publication number: WO 2019/142758

(56) References cited:
- EP-A1- 1 994 866
- EP-A1- 3 106 069
- EP-A1- 3 106 069
- EP-A1- 3 181 023
- EP-A1- 3 181 023
- JP-A- 2008 188 420
- JP-A- 2009 148 534
- JP-A- 2010 527 677
- JP-A- 2016 064 115
- JP-A- 2016 064 115
- US-A1- 2016 015 215

## Description

### Technical Field

The present invention relates to a coffee bean grinding mechanism that rotates a conical inner blade and a conical outer blade relative to each other to grind coffee beans falling into a gap between both.

### Background Art

As this type of coffee bean grinding mechanism in the related art, for example, there is a coffee bean grinding device disclosed in PTL 1. The coffee bean grinding device includes a first blade portion A provided in a main body container and a second blade portion B that is provided in a charge container to face the first blade portion A, and a gap between both is a grinding space of coffee beans. One end portion in an extension direction of the grinding space serves as a discharge portion through which ground beans are discharged from the grinding space to outside. The bean powder discharged from the discharge portion is pushed out to a discharge passage to be guided to a powder container by the rotation of a rotary vane.

The gap between the first blade portion A and the second blade portion B is adjusted by a gap adjusting unit to thereby adjust the grain size of the beans discharged from the discharge portion. The gap adjusting unit includes a support table that has a cylindrical shape and supports and fixes the second blade portion B from outside, and an adjustment ring that integrally rotates with the support table. A support side wall having a cylindrical shape is provided outside the support table in a radial direction, and the support side wall is fixed to the charge container by screws. A male screw formed in an outer peripheral surface of the support table is screwed into a female screw formed in an inner peripheral surface of the support side wall, and when the adjustment ring rotates, the support table rotates and the support table moves with respect to the support side wall. The second blade portion B is fixed to the charge container via a feed screw mechanism.

In addition, as this type of coffee bean grinding mechanism in the related art, there is also a coffee mill disclosed in PTL 2. The coffee mill is configured such that a male blade and a female blade of a grinder which are attached to an outer cylinder and an inner cylinder face each other, and the outer cylinder and the inner cylinder are height-adjustably and rotatably connected. The outer cylinder has an internal space that opens on upper and lower sides. The male blade is fixed to the inside of the outer cylinder and a container is detachably connected to a lower opening. The inner cylinder has an internal space that opens on upper and lower sides and the female blade is fixed thereinside. The inner cylinder has a shape where a lower portion thereof can be inserted into the outer cylinder from an upper opening of the outer cylinder, and a handle protrudes from an upper outer wall thereof. Height adjusting means adjusts the heights of the outer cylinder and the inner cylinder to adjust the size of a gap between the male blade and the female blade; and thereby, the coarseness of milled coffee beans is adjusted. In the male blade, a spiral groove is formed as a supply groove in a peripheral inclined surface of the male blade from an upper portion to a lower portion thereof, and an inclined fine blade is formed as a pressing and crushing portion in the lower portion of the peripheral inclined surface. In the female blade, a plurality of feed blades are formed on the entire periphery of an upper inner surface of the female blade in a vertical direction, and a pressing and crushing portion is formed by a blade that is engraved in a lower inclined surface, which is increased in an inclined shape in diameter as the lower inclined surface approaches a lower portion, in a direction where the blade intersects the blade engraved in the pressing and crushing portion of the male blade.

In addition, as this type of coffee bean grinding mechanism in the related art, there is also a coffee mill disclosed in PTL 3. The coffee mill includes a mill that rotates, and a side mill that is fixedly disposed on the periphery of the mill to grind coffee beans and discharge the ground coffee beans downward. The mill includes a main body portion having a truncated cone shape, a plurality of cutter blades that are spirally formed from an upper peripheral edge of the main body portion toward a lower portion side, and a guide groove that also serves as a sub-cutter that continues from a lower portion of a spiral groove between the cutter blades. The mill is fixed to a drive shaft that is connected to an output shaft of a geared motor via a coupling. The side mill includes a plurality of cutter blades, which surround the main body portion in parallel from an upper portion of the side mill toward a lower portion side, inside an opening portion having a larger inner diameter than the exterior of a bottom surface of the main body portion of the mill. The side mill is fixed to an opening portion at a lower end of a cone to face the periphery of the mill. The coffee beans are forcibly transferred along the direction of the spiral groove by the rotation of the mill in one direction and are sheared between the cutter blades, and milled bean pieces that have been sheared are blown downward by centrifugal force to be accumulated in a cup.

### Citation List

### Patent Literature

[PTL 1] JP-A-2016-22413
[PTL 2] JP-UM-A-1-79437
[PTL 3] JP-A-9-173222

### Summary of Invention

### Technical Problem

However, in the coffee bean grinding device of the related art disclosed in PTL 1, the support table that includes the male screw, which forms the feed screw mechanism, formed in the outer peripheral surface and supports and fixes the second blade portion B from outside, and the support side wall that includes the female screw, which forms the feed screw mechanism, formed in the inner peripheral surface are fixed to the charge container. Namely, the second blade portion B is fixed to the charge container via the feed screw mechanism forming the gap adjusting unit. For this reason, in the coffee bean grinding device of the related art disclosed in PTL 1, it is not possible to easily remove powder of the coffee beans which is clogged between the second blade portion B and the support table and the support side wall around the second blade portion B. There is a risk that powder of the coffee beans remains as deposited in the coffee bean grinding mechanism and the powder which has remained to be rotten is mixed with powder of the coffee beans which are normally ground to cause food damage.

### Solution to Problem

The present invention has been made to solve such problems.

According to an aspect of the present invention, there is provided a coffee bean grinding mechanism including: a conical inner blade including a blade formed on an outer peripheral inclined surface of a cone of which a top is cut off; a conical outer blade in which an opposing blade is formed on an inner periphery of a cylindrical barrel portion, which covers a periphery of the blade, to face the blade with a predetermined gap therebetween; a gap adjusting mechanism that adjusts a size of the gap; a rotation drive mechanism that rotates the conical inner blade and the conical outer blade relative to each other to grind a coffee bean, which falls into the gap, to a grain size corresponding to the size of the gap; a discharge port that discharges the ground coffee bean; and a rotary vane that rotates together with the conical inner blade to sweep out the ground coffee bean to the discharge port.

The coffee bean grinding mechanism further includes a base in which a drum having a cylindrical shape is formed to have a space that surrounds a periphery of the conical inner blade and the rotary vane provided in a bottom portion of the conical inner blade and is connected to the discharge port, the conical inner blade and the rotary vane are detachably attached to a rotary shaft penetrating through a center of a bottom surface of the drum in a state where a bottom surface of the rotary vane adjoins the bottom surface of the drum, and a guiding protrusion portion protruding from an outer periphery of the conical outer blade engages with a guiding recessed portion formed in the drum to be parallel with an axis of the rotary shaft to thereby cause the conical outer blade to be accommodated in the drum to be movable in an axial direction; an upward and downward movement cam which has a ring shape that is rotatably fitted to an outer periphery of the drum, in which a female screw, which is screwed onto a pin that is formed on the outer periphery of the conical outer blade to protrude to the outer periphery of the drum from a notch formed in the drum to be parallel with the axis when the upward and downward movement cam is fitted to the outer periphery of the drum, is engraved in an inner periphery of the upward and downward movement cam, which moves the conical outer blade in the axial direction to change the size of the gap when the pin that rotates to be screwed into the female screw moves due to screw action, and in which a protrusion portion protruding in parallel with the axis is formed on an outer periphery of the upward and downward movement cam; a grain size-adjusting rotary component which has a cylindrical shape rotatably fitted to the outer periphery of the drum and is mounted on the upward and downward movement cam fitted to the outer periphery of the drum, in which an engaging groove engaging with the protrusion portion formed on the outer periphery of the upward and downward movement cam and a worm wheel, which is formed of teeth engraved in a direction parallel with the axis to be arranged in a circumferential direction, is formed on an outer periphery of the grain size-adjusting rotary component, and which rotates together with the upward and downward movement cam when the protrusion portion engages with the engaging groove; and a grain size-adjusting and setting member which is provided in the base at a position adjacent to the drum and in which a worm gear screwed onto the worm wheel is formed.

According to this configuration, the guiding protrusion portion protruding from the outer periphery of the conical outer blade engages with the guiding recessed portion formed in the drum, so that the rotation of the conical outer blade is fixed, and as the rotary shaft rotates, the conical inner blade and the rotary vane rotate, so that the conical inner blade relatively rotates with respect to the conical outer blade. Therefore, the coffee bean falling into a gap between the conical inner blade and the conical outer blade is ground and milled into powder by the blade formed on the outer peripheral inclined surface of the conical inner blade and the opposing blade formed on the inner periphery of the cylindrical barrel portion of the conical outer blade to face the blade. The milled coffee bean is swept out to the discharge port, which is connected to the space formed inside the drum, by the rotary vane that is provided in the bottom portion of the conical inner blade to rotate together with the conical inner blade in a state where the bottom surface of the rotary vane adjoins the bottom surface of the drum.

The coarseness to which the coffee bean is milled, namely, the grain size of the milled bean is adjusted by adjusting the size of the gap between the conical inner blade and the conical outer blade using the gap adjusting mechanism. According to this configuration, the gap adjusting mechanism is formed of the pin that is formed on the outer periphery of the conical outer blade to protrude from the notch formed in the drum to the outer periphery of the drum, the upward and downward movement cam including the female screw, which is screwed onto the pin, engraved in the inner periphery thereof, the grain size-adjusting rotary component that includes the engaging groove engaging with the protrusion portion formed on the outer periphery of the upward and downward movement cam and the worm wheel, formed on the outer periphery thereof, and the grain size-adjusting and setting member in which the worm gear screwed onto the worm wheel is formed. The worm gear formed in the grain size-adjusting and setting member is rotated, so that the grain size-adjusting rotary component including the worm wheel, which is screwed to the worm gear, formed on the outer periphery thereof rotates around the drum by an amount corresponding to the rotation amount of the worm gear. When the worm wheel rotates, also the upward and downward movement cam of which the protrusion portion engages with the engaging groove formed in the outer periphery of the grain size-adjusting rotary component rotates around the drum, together with the grain size-adjusting rotary component. Since the female screw that is screwed onto the pin formed on the outer periphery of the conical outer blade is engraved in the inner periphery of the upward and downward movement cam, when the upward and downward movement cam rotates around the drum, the pin protruding to the outer periphery of the drum from the notch formed in the drum moves in the direction parallel with the rotary shaft due to the screw action with the female screw. As a result, the conical outer blade moves in the axial direction of the rotary shaft according to the rotation amount of the upward and downward movement cam, namely, the rotation amount and the rotation direction of the worm gear formed on the outer periphery of the grain size-adjusting and setting member, to adjust the size of the gap between the conical inner blade and the conical outer blade.

The coffee bean grinding mechanism with such a configuration can be simply disassembled. Namely, the grain size-adjusting rotary component, the upward and downward movement cam, and the conical outer blade can be separated from the drum by being moved in the direction parallel with the axis of the rotary shaft. In addition, the conical inner blade and the rotary vane can be simply removed from the base due to being detachably attached to the rotary shaft. Therefore, it is possible to simply remove residual milled powder deposited in the drum and milled powder adhering to the components by separating the components from each other. For this reason, it is possible to provide the coffee bean grinding mechanism without a concern that powder of the coffee bean remains as deposited in the coffee bean grinding mechanism and the powder which has remained to be rotten is mixed with powder of the coffee bean which is normally ground to cause food damage.

In addition, according to the aspect of the present invention, the coffee bean grinding mechanism further includes a gear that is provided coaxially with the rotary shaft below the drum to transmit power to the rotary shaft, and has a smaller outer diameter than an outer diameter of a bottom surface of the cone of the conical inner blade.

The discharge port includes a passage, through which milled powder of the coffee bean falls vertically from a location where the blade on an outer periphery of the bottom surface of the cone faces the opposing blade on the inner periphery of the cylindrical barrel portion of the conical outer blade, arranged side by side with the gear.

A plurality of vanes are provided on an outer periphery of a cylindrical side surface of the rotary vane having an outer diameter which is the same as the outer periphery of the bottom surface of the cone and at which the cylindrical side surface is aligned with a gear side inner wall of the passage or exceeds a formation position of the gear side inner wall, or an outer diameter which is smaller than the outer periphery of the bottom surface of the cone and at which the cylindrical side surface is aligned with the gear side inner wall of the passage or exceeds the formation position of the gear side inner wall, to protrude toward an inner peripheral wall of the drum with a predetermined interval therebetween for tips of the vanes to be close to the inner peripheral wall of the drum and to overhang to the discharge port.

According to this configuration, since the outer diameter of the gear that transmits power to the rotary shaft is smaller than the outer diameter of the bottom surface of the cone of the conical inner blade, the discharge port including the passage, through which the milled powder of the coffee bean falls vertically from the location where the blade of the conical inner blade and the opposing blade on the inner periphery of the cylindrical barrel portion of the conical outer blade face each other on the outer periphery of the bottom surface of the cone, can be provided side by side with the gear. Almost all of the milled powder falling onto the bottom surface of the drum is collected around the discharge port by the rotation of the rotary vane of which the vanes protrude from the cylindrical side surface for the tips of the vanes to be close to the inner peripheral wall of the drum and of which the bottom surface adjoins the bottom surface of the drum. Therefore, almost all of the milled powder falling onto the bottom surface of the drum is collected around the discharge port by the rotation of the rotary vane, and is reliably swept out to the discharge port by the vanes that overhang to the discharge port. In addition, the milled powder that falls from a portion where the blades face each other at a location facing the discharge port is directly released to the discharge port as it is. In the coffee bean grinding mechanism of the related art disclosed in PTL 1, since milled powder discharged from the discharge portion is pushed out via the discharge passage that is formed flat to have a predetermined length, the milled powder is deposited in the discharge passage. However, according to this configuration, there is no such a discharge passage as in the related art, and thus there is provided the coffee bean grinding mechanism that further reduces a risk that powder of the coffee bean remains as deposited in the coffee bean grinding mechanism and further reduces a concern of causing food damage.

In addition, according to the aspect of the present invention, a step portion in which the engaging groove is formed of a discontinued part and the worm wheel are formed to protrude in an arc shape at a predetermined position in the circumferential direction and at a predetermined height in the axial direction on an outer periphery of the grain size-adjusting rotary component. When the protrusion portion engages with the engaging groove, a relative position of the upward and downward movement cam with respect to the grain size-adjusting rotary component is defined.

The coffee bean grinding mechanism further includes a pair of hook portions that are provided spaced apart from each other to protrude from the base in the vicinity of the outer periphery of the drum, to allow the grain size-adjusting rotary component to pass without interfering with the step portion and the worm wheel to be fitted to an attachment position only when a rotation position of the female screw formed on the inner periphery of the upward and downward movement cam is at an initial position for adjusting a grain size with respect to the pin formed on the outer periphery of the cylindrical barrel portion of the conical outer blade at an event where the grain size-adjusting rotary component is fitted to the outer periphery of the drum, and to interpose the step portion and the worm wheel between grooves, which are formed in side surfaces of the hook portions at a predetermined height in the axial direction by cutoff, when the grain size-adjusting rotary component is fitted to the attachment position to rotate.

According to this configuration, only when the rotation position of the female screw formed on the inner periphery of the upward and downward movement cam is at the initial position for adjusting the grain size with respect to the pin formed on the outer periphery of the cylindrical barrel portion of the conical outer blade, the grain size-adjusting rotary component is fitted to the drum at the attachment position by the pair of hook portions provided on the base. As the attachment position of the grain size-adjusting rotary component is determined, also the attachment position of the upward and downward movement cam of which the relative position is determined by the grain size-adjusting rotary component is automatically determined. Therefore, no matter who assembles the grain size-adjusting rotary component and the upward and downward movement cam to the base, the grain size-adjusting rotary component and the upward and downward movement cam are attached at fixed positions and are attached at the initial position for adjusting the grain size. For this reason, the coffee bean grinding mechanism with improved assemblability is provided.

In addition, according to the aspect of the present invention, a scale representing a grinding grain size of the coffee bean is formed on the outer periphery of the upward and downward movement cam, and an indicator indicating a scale corresponding to a current grinding grain size of the coffee bean is formed in the base.

According to this configuration, the rotation of the worm gear formed in the grain size-adjusting and setting member is transmitted to the upward and downward movement cam via the grain size-adjusting rotary component. The rotation position of the upward and downward movement cam is found out by reading the scale that is formed on the outer periphery of the upward and downward movement cam and is indicated by the indicator formed in the base. For this reason, it is possible to easily identify the grinding grain size of the coffee bean milled by the coffee bean grinding mechanism, and the coffee bean grinding mechanism with improved usability is provided.

In addition, according to the aspect of the present invention, the blade of the conical inner blade includes a plurality of first blades that are formed to protrude at both ends of a plurality of spiral grooves which are engraved on the outer peripheral inclined surface of the cone from an upper side to a lower side and a plurality of second blades that are formed in an inclined manner on the lower side of the outer peripheral inclined surface to be finer than the first blade, a trailing end on a second blade side of the spiral groove bites into a formation region of the second blade, and a recess connected to the spiral groove is formed in the bitten formation region of the second blade.

The opposing blade of the conical outer blade includes a first opposing blade that is coarsely formed on the inner periphery of the cylindrical barrel portion covering a periphery of the first blade, to face the first blade with a predetermined gap therebetween, and a second opposing blade that is finely formed on the inner periphery of the cylindrical barrel portion covering a periphery of the second blade, to face the second blade with a predetermined gap therebetween.

According to this configuration, as the conical inner blade rotates, the coffee bean falling into the gap between the conical inner blade and the conical outer blade falls along the plurality of spiral grooves that are engraved in the outer peripheral inclined surface of the conical inner blade from the upper side to the lower side. During this falling, the coffee bean is coarsely ground by being interposed between the plurality of first blade of the conical inner blade which are formed to protrude at the both ends of the spiral groove and the first opposing blade that is coarsely formed on the inner periphery of the cylindrical barrel portion of the conical outer blade to face the first blades. When the coarsely ground coffee bean fall further, the coarsely ground coffee bean is finely milled by being interposed between the plurality of second blades that are formed in an inclined manner below the first blades of the conical inner blade to be finer than the first blades and the second opposing blade that is finely formed on the inner periphery of the cylindrical barrel portion of the conical outer blade to face the second blade. A portion of the finely milled coffee bean which cannot fall from a gap between the second blade and the second opposing blade is accumulated in the recess that is connected to the spiral groove formed to bite into the formation region of the second blade. A discharge force toward the lower side is applied to the milled bean accumulated in the recess by the second opposing blade that is finely formed in the conical outer blade to face the recess and the ground coffee bean falling from above, and the milled bean is promptly pushed out from the gap between the second blade and the second opposing blade by the discharge force.

In the coffee mill disclosed in PTL 2, powder of the milled bean is clogged between the pressing and crushing portion that is an inclined fine blade formed in the lower portion of the peripheral inclined surface of the male blade and the pressing and crushing portion that is formed in the inclined surface which is increased in an inclined shape in diameter as the inclined surface approaches the lower portion of the female blade. Therefore, the discharge amount of the milled bean is small. However, according to this configuration, as described above, powder of the milled bean that cannot fall from the gap between the second blade and the second opposing blade is promptly pushed out by the discharge force applied to the milled bean accumulated in the recess connected to the spiral groove; and thereby, it is possible to increase the discharge amount of the milled bean without experiencing clogging as with the coffee mill disclosed in PTL 2.

In addition, according to the aspect of the present invention, the second opposing blade of the conical outer blade is formed to have the number of blades which is approximately 2.5 times the number of blades of the first opposing blade, and has a height aligned with a height of the recess.

According to this configuration, it is possible to further increase the discharge amount of the milled bean by optimizing a relationship in number of blades between the first opposing blade that is coarsely formed on the inner periphery of the cylindrical barrel portion of the conical outer blade to face the first blade with the predetermined gap therebetween and the second opposing blade that is finely formed on the inner periphery of the cylindrical barrel portion to face the second blade with the predetermined gap therebetween and optimizing the height of the second opposing blade.

In addition, according to the aspect of the present invention, a predetermined gap is formed between the outer periphery of the conical outer blade and an inner periphery of the drum.

In the coffee mill disclosed in PTL 2, the male blade is fixed to the inside of the outer cylinder and the female blade is fixed to the inside of the inner cylinder. Therefore, the rotation centers of the male blade and the female blade are fixed and the axes of the outer cylinder and the inner cylinder are eccentric from each other, and thus a gap formed between the male blade and the female blade is formed with a width around the male blade and cannot be reduced to the width or less. In addition, also in the coffee mill disclosed in PTL 3, the mill is fixed to the drive shaft that is connected to the output shaft of the geared motor via the coupling. The side mill is fixed to the opening portion at the lower end of the cone to face the periphery of the mill. Therefore, the rotation centers of the mill and the side mill are fixed and the axes of the drive shaft and the side mill are eccentric from each other, and thus a gap formed between the mill and the side mill is formed with a width around the mill and cannot be reduced to the width or less. However, in this configuration, the conical outer blade is accommodated and attached inside the drum without being fixed, and can move freely due to the predetermined gap formed between the outer periphery of the conical outer blade and the inner periphery of the drum. Therefore, the position of the conical outer blade can be changed inside the drum to coincide with the rotation center of the conical inner blade. For this reason, according to this configuration, the rotation centers of the conical outer blade and the conical inner blade coincide with each other due to self-alignment of the conical outer blade with respect to the conical inner blade; and thereby, it is possible to reduce the gap formed between the inner periphery of the conical outer blade and the outer periphery of the conical inner blade. As a result, it is possible to more finely mill the coffee bean.

In addition, according to the aspect of the present invention, the grain size-adjusting and setting member includes a knob, which rotates the worm gear, in an end portion thereof.

According to this configuration, the knob is operated with the hand to rotate the worm gear, so that the coarseness to which the coffee bean is milled is manually adjusted. For this reason, adjustment for the grain size of the coffee bean is not limited to adjustment performed by electrically rotating the worm gear, and the coffee bean grinding mechanism with improved operability is provided.

### Advantageous Effects of Invention

According to the present invention, it is possible to provide the coffee bean grinding mechanism without a concern that powder of the coffee bean remains as deposited in the coffee bean grinding mechanism and the powder which has remained to be rotten is mixed with powder of the coffee bean which is normally ground to cause food damage.

### Brief Description of Drawings

FIG. 1 is an exploded perspective view of a coffee bean grinding mechanism according to an embodiment of the present invention.
FIG. 2 is an exterior perspective view of the coffee bean grinding mechanism according to the embodiment as seen obliquely from the upper left side.
FIG. 3 is an exterior perspective view of the coffee bean grinding mechanism according to the embodiment as seen obliquely from the upper right side.
FIG. 4A is a plan view of the coffee bean grinding mechanism according to the embodiment, FIG. 4B is a front view, and FIG. 4C is a bottom view.
FIG. 5A is a left side view of the coffee bean grinding mechanism according to the embodiment and FIG. 5B is a right side view.
FIG. 6 is a sectional view of the coffee bean grinding mechanism according to the embodiment.

### Description of Embodiments

Next, a mode for carrying out a coffee bean grinding mechanism according to the present invention will be described.

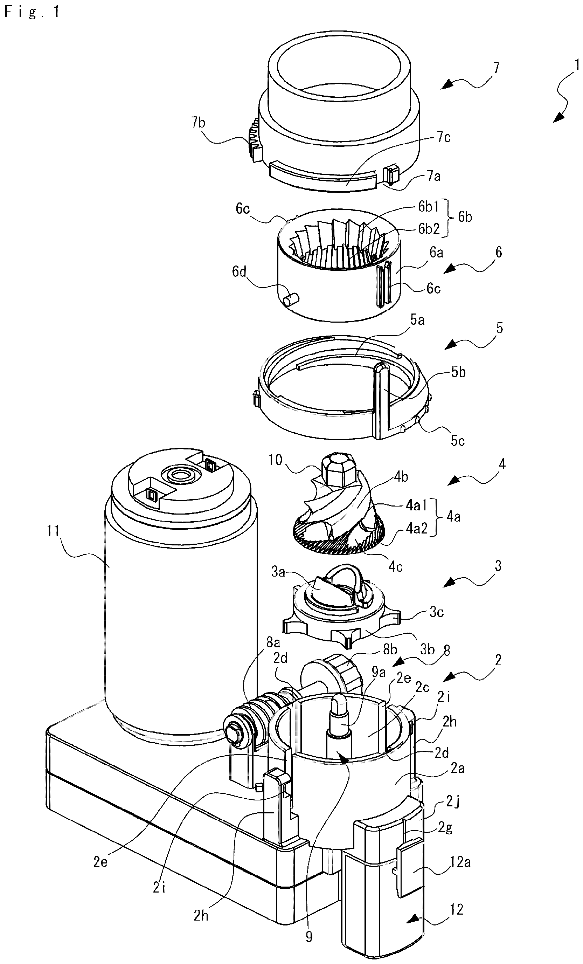

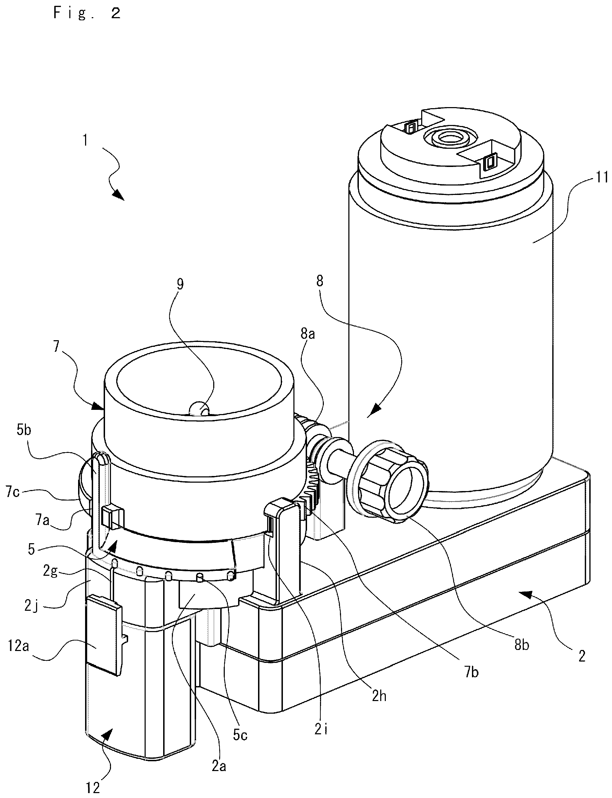

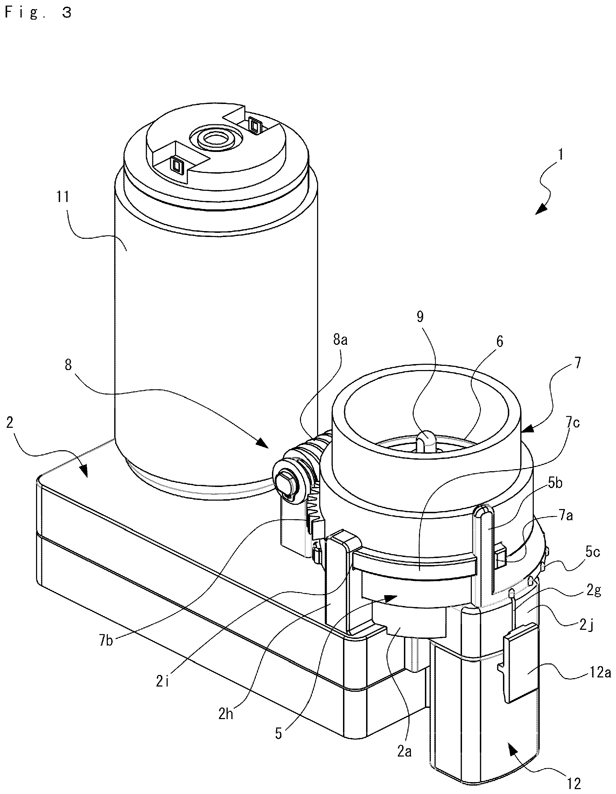

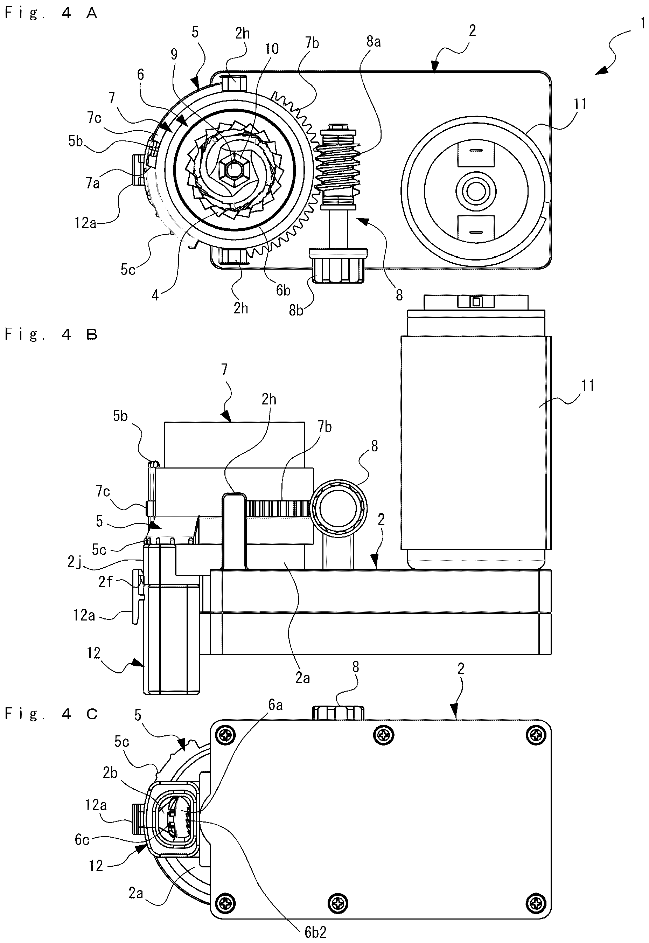

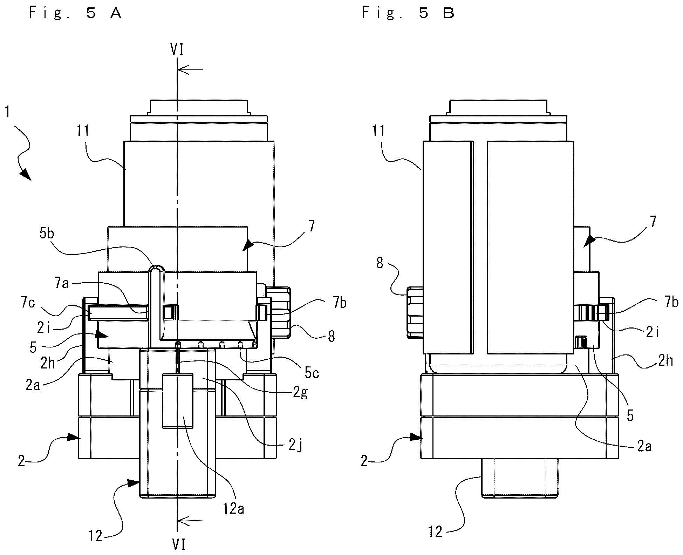

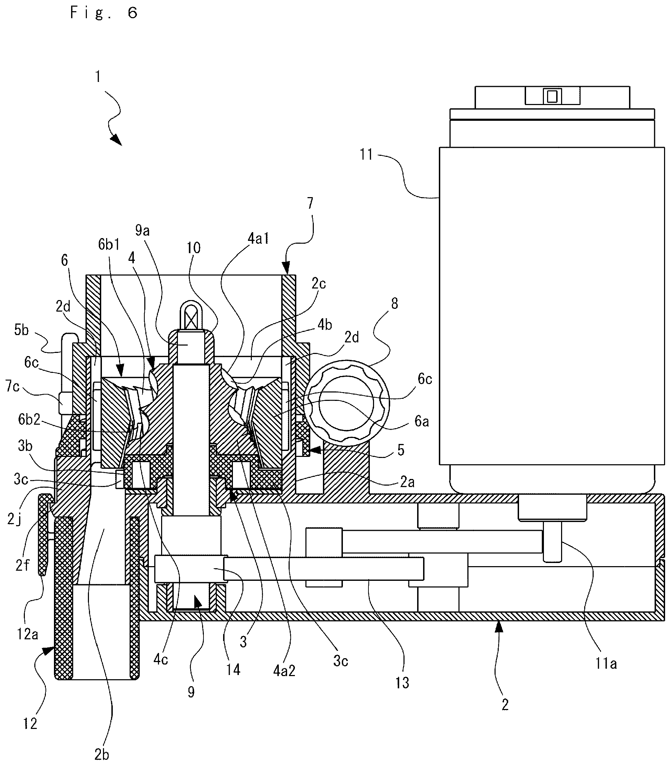

FIG. 1 is an exploded perspective view of a coffee bean grinding mechanism 1 according to an embodiment of the present invention. FIG. 2 is an exterior perspective view as seen obliquely from the upper left side. FIG. 3 is an exterior perspective view as seen obliquely from the upper right side. FIG. 4A is a plan view, FIG. 4B is a front view, and FIG. 4C is a bottom view. FIG. 5A is a left side view and FIG. 5B is a right side view. In addition, FIG. 6 is a sectional view of the coffee bean grinding mechanism 1 taken along broken line VI-VI illustrated in FIG 5A and seen from an arrow direction.

The coffee bean grinding mechanism 1 is configured to include a base 2, a rotary vane 3, a conical inner blade 4, an upward and downward movement cam 5, a conical outer blade 6, a grain size-adjusting rotary component 7, and a grain size-adjusting and setting member 8.

The conical inner blade 4 includes a blade 4a formed on an outer peripheral inclined surface of a truncated cone that is the result of cutting off the top of a cone. The blade 4a includes a first blade 4a1 and a second blade 4a2. A plurality of the first blades 4a1 are formed to protrude at both ends of a plurality of spiral grooves 4b that are engraved in the outer peripheral inclined surface of the truncated cone from an upper side to a lower side. A plurality of the second blades 4a2 are formed in an inclined manner on the lower side of the outer peripheral inclined surface of the truncated cone to be finer than the first blade 4a1. A trailing end on a second blade 4a2 side of the spiral groove 4b bites into a formation region of the second blade 4a2, and a recess 4c that is formed into a bowl shape and is connected to the spiral groove 4b is formed in the bitten formation region of the second blade 4a2.

An engaging protrusion 3a having the shape of a divided hemisphere is formed on an upper surface of the rotary vane 3. The rotary vane 3 is provided to integrally rotate with the conical inner blade 4 in a bottom portion of the conical inner blade 4 when the engaging protrusion 3a engages with an engaging groove (unillustrated) formed on the inside of the truncated cone of the conical inner blade 4. A plurality of vanes 3c are provided to protrude from an outer periphery of a cylindrical side surface 3b of the rotary vane 3 with a predetermined interval therebetween. Each of the vanes 3c is formed with the tip thereof upward in a vertical direction.

A drum 2a having a cylindrical shape is formed on the base 2. The drum 2a surrounds the periphery of the conical inner blade 4 and the rotary vane 3 provided in the bottom portion of the conical inner blade 4, and has a space 2c connected to a discharge port 2b (refer to FIG. 6). The conical inner blade 4 and the rotary vane 3 are detachably attached to a rotary shaft 9 penetrating through the center of a bottom surface of the drum 2a. In the present embodiment, the rotary shaft 9 is inserted through a shaft hole that opens at the center of each of the conical inner blade 4 and the rotary vane 3, and a nut 10 is screwed onto a male screw forming portion 9a of the rotary shaft 9, so that the conical inner blade 4 and the rotary vane 3 are detachably attached to the rotary shaft 9.

As illustrated in FIG. 6, a gear 14 is coaxially provided in a lower end portion of the rotary shaft 9 below the drum 2a. The gear 14 has an outer diameter smaller than the outer diameter of a bottom surface of the truncated cone of the conical inner blade 4, and is connected to an output shaft 11a of a motor 11 via a speed reduction gear mechanism 13 accommodated inside the base 2. Therefore, when the motor 11 is energized, power is transmitted to the rotary shaft 9 by the speed reduction gear mechanism 13 and the gear 14 to rotate the rotary shaft 9. The rotary shaft 9, the gear 14, the speed reduction gear mechanism 13, and the motor 11 form a rotation drive mechanism that relatively rotates the conical inner blade 4 with respect to the conical outer blade 6 to thereby grind coffee beans, which fall into a gap between the conical inner blade 4 and the conical outer blade 6, to a grain size corresponding to the size of the gap.

The rotary vane 3 is accommodated in the drum 2a in a state where a bottom surface of the rotary vane 3 adjoins the bottom surface of the drum 2a, and tips of the vanes 3c protrude toward an inner peripheral wall of the drum 2a to be close to the inner peripheral wall of the drum 2a. In addition, as illustrated in FIG. 6, the cylindrical side surface 3b of the rotary vane 3 has an outer diameter which is the same as an outer periphery of the bottom surface of the truncated cone of the conical inner blade 4 and at which the cylindrical side surface 3b is aligned with a gear 14 side inner wall of the passage of the discharge port 2b. The tip of the vane 3c overhangs to the discharge port 2b, and the rotary vane 3 rotates together with the conical inner blade 4 to sweep out milled powder of the coffee beans, which are ground by the conical inner blade 4 and the conical outer blade 6 to fall onto the bottom surface of the drum 2a, to the discharge port 2b. The cylindrical side surface 3b may have an outer diameter which is the same as the outer periphery of the bottom surface of the truncated cone of the conical inner blade 4 and at which the cylindrical side surface 3b exceeds the formation position (unillustrated) of the gear 14 side inner wall of the passage of the discharge port 2b, the formation position being close to a gear 14 side. In addition, the cylindrical side surface 3b may have an outer diameter which is smaller than the outer periphery of the bottom surface of the truncated cone of the conical inner blade 4 and at which the cylindrical side surface 3b is aligned with the gear 14 side inner wall of the passage of the discharge port 2b or exceeds the formation position (unillustrated) of the gear 14 side inner wall, the formation position being close to the gear 14 side.

The discharge port 2b is formed such that the periphery thereof is covered with a discharge member-connecting portion 2j. An inner wall on an opposite side of the passage of the discharge port 2b from the gear 14 side inner wall is increased in diameter as the inner wall approaches the lower side, and the coffee beans that have been ground and milled are discharged by the discharge port 2b from the drum 2a. The discharge port 2b includes the passage, through which the milled powder of the coffee beans falls vertically from a location where the blade 4a on the outer periphery of the bottom surface of the truncated cone of the conical inner blade 4 faces an opposing blade 6b on an inner periphery of a cylindrical barrel portion 6a of the conical outer blade 6, arranged side by side with the gear 14. The discharge member-connecting portion 2j is integrally formed with the base 2 in a lower portion of a side wall of the drum 2a that protrudes from a main body side end of the base 2. A discharge member 12 that guides the milled powder of the coffee beans discharged from the discharge port 2b to a container (unillustrated) is detachably attached to the discharge member-connecting portion 2j.

In the present embodiment, when a latch piece 12a which is provided in a side portion of the discharge member 12 such that upper and lower ends of the latch piece 12a are oscillatable engages with an engaging protrusion 2f that is formed to protrude from a side portion of the discharge member-connecting portion 2j, the discharge member 12 is attached to the discharge member-connecting portion 2j. In addition, when the lower end of the latch piece 12a is pressed to thereby release engagement between the latch piece 12a and the engaging protrusion 2f, the discharge member 12 is removed from the discharge member-connecting portion 2j. The discharge member 12 is not necessarily required to be provided to be detachable from the discharge member-connecting portion 2j, and may be configured to be integrally formed with the discharge member-connecting portion 2j.

The conical outer blade 6 has a smaller outer periphery than an inner periphery of the drum 2a, and is accommodated inside the drum 2a with a predetermined gap between the outer periphery thereof and the inner periphery of the drum 2a. The opposing blade 6b is formed on the inner periphery of the cylindrical barrel portion 6a of the conical outer blade 6. When the conical outer blade 6 is accommodated inside the drum 2a, the opposing blade 6b covers the periphery of the blade 4a of the conical inner blade 4 to face the blade 4a with a predetermined gap therebetween. As illustrated in FIG. 6, the blade 4a on the outer periphery of the bottom surface of the truncated cone of the conical inner blade 4 faces the opposing blade 6b of the conical outer blade 6 at a height position inner than a bottom surface of the cylindrical barrel portion 6a of the conical outer blade 6. The opposing blade 6b includes a first opposing blade 6b1 and a second opposing blade 6b2. The first opposing blade 6b1 is coarsely formed on the inner periphery of the cylindrical barrel portion 6a covering the periphery of the first blade 4a1, to face the first blade 4a1 with a predetermined gap therebetween. The second opposing blade 6b2 is finely formed on the inner periphery of the cylindrical barrel portion 6a covering the periphery of the second blade 4a2, to face the second blade 4a2 with a predetermined gap therebetween. In the present embodiment, the number of blades of the second opposing blade 6b2 is set to 2.5 times the number of blades of the first opposing blade 6b1, and the second opposing blade 6b2 has a height aligned with the recess 4c of the conical inner blade 4. In the present embodiment, the second opposing blade 6b2 is formed finely and vertically, but may be configured to be formed finely and obliquely.

A pair of guiding protrusion portions 6c and 6c are formed to protrude in parallel with the axis of the rotary shaft 9 at opposite positions on an outer periphery of the cylindrical barrel portion 6a of the conical outer blade 6. In addition, a pair of guiding recessed portions 2d and 2d are formed in parallel with the axis of the rotary shaft 9 at opposite positions on the side wall of the drum 2a. When the pair of guiding protrusion portions 6c and 6c engage with the pair of guiding recessed portions 2d and 2d, the conical outer blade 6 is accommodated in the drum 2a to be movable in an axial direction of the rotary shaft 9. In addition, a pair of pins 6d and 6d are erected at opposite positions on the outer periphery of the cylindrical barrel portion 6a of the conical outer blade 6. In addition, a pair of notches 2e and 2e are formed in parallel with the axis of the rotary shaft 9 at opposite positions on the side wall of the drum 2a. When the conical outer blade 6 is accommodated in the drum 2a, tips of the pair of pins 6d and 6d formed on the outer periphery of the cylindrical barrel portion 6a of the conical outer blade 6 protrude from the pair of notches 2e and 2e formed on the side wall of the drum 2a.

The upward and downward movement cam 5 has a ring shape that is rotatably fitted to an outer periphery of the drum 2a. A double-thread female screw 5a that is screwed onto the pair of pins 6d and 6d protruding to the outer periphery of the drum 2a when the upward and downward movement cam 5 is fitted to the outer periphery of the drum 2a is engraved in an inner periphery of the upward and downward movement cam 5. When the upward and downward movement cam 5 rotates, the pair of pins 6d and 6d screwed into the double-thread female screw 5a moves in a direction parallel with the axis of the rotary shaft 9 due to the screw action. The cylindrical barrel portion 6a of the conical outer blade 6 moves upward and downward together with the pair of pins 6d and 6d due to the screw action to thereby change the size of the gap formed between the blade 4a of the conical inner blade 4 and the opposing blade 6b of the conical outer blade 6. A protrusion portion 5b that protrudes in the direction parallel with the axis of the rotary shaft 9 is formed into a columnar shape on an outer periphery of the upward and downward movement cam 5. In addition, a plurality of scales 5c representing the grinding grain sizes of the coffee beans are formed on the outer periphery of the upward and downward movement cam 5. A line 2g that indicates the scale 5c corresponding to the current grinding grain size of the coffee beans is formed in the base 2 as an indicator. A number of the scale 5c representing the milled grain size of the coffee beans may be written side by side with a projection portion formed with a predetermined interval.

The grain size-adjusting rotary component 7 has a cylindrical shape that is rotatably fitted to the outer periphery of the drum 2a, and is attached to the base 2 in a state where the grain size-adjusting rotary component 7 is mounted on the upward and downward movement cam 5 fitted to the outer periphery of the drum 2a. An engaging groove 7a and a worm wheel 7b are formed in an outer periphery of the grain size-adjusting rotary component 7. The engaging groove 7a is a discontinued part of a step portion 7c that is formed into a band shape on the outer periphery of the grain size-adjusting rotary component 7, and engages with the protrusion portion 5b formed on the outer periphery of the upward and downward movement cam 5. The worm wheel 7b is formed into a band shape on the outer periphery of the grain size-adjusting rotary component 7, and is formed of teeth that are engraved in the direction parallel with the axis of the rotary shaft 9 and are arranged in a circumferential direction. Each of the step portion 7c and the worm wheel 7b is formed to protrude in an arc shape at a predetermined position in the circumferential direction and at a predetermined height in the axial direction on the outer periphery of the grain size-adjusting rotary component 7. When the protrusion portion 5b engages with the engaging groove 7a, the grain size-adjusting rotary component 7 rotates together with the upward and downward movement cam 5. When the protrusion portion 5b engages with the engaging groove 7a, the relative position of the upward and downward movement cam 5 with respect to the grain size-adjusting rotary component 7 is defined.

A pair of hook portions 2h and 2h are provided upright and spaced apart from each other to protrude from the surface of the base 2 at symmetrical positions around the rotary shaft 9 on the base 2 in the vicinity of the outer periphery of the drum 2a. The pair of hook portions 2h and 2h allow the grain size-adjusting rotary component 7 to pass along the periphery of the drum 2a without interfering with the step portion 7c and the worm wheel 7b to be fitted to the drum 2a at the attachment position only when the rotation position of the double-thread female screw 5a formed on the inner periphery of the upward and downward movement cam 5 is at an initial position for adjusting the grain size with respect to the pins 6d formed on the outer periphery of the cylindrical barrel portion 6a of the conical outer blade 6 at an event where the grain size-adjusting rotary component 7 is fitted to the outer periphery of the drum 2a. In addition, when the grain size-adjusting rotary component 7 is fitted at the attachment position to rotate, the pair of hook portions 2h and 2h interpose the step portion 7c and the worm wheel 7b between grooves 2i and 2i that are formed in side surfaces of the hook portions 2h and 2h at a predetermined height in the axial direction by cutout. In addition, the grain size-adjusting and setting member 8 in which a worm gear 8a screwed onto the worm wheel 7b is formed is provided in the base 2 at a position adjacent to the drum 2a. In the present embodiment, the grain size-adjusting and setting member 8 includes a knob 8b, which rotates the worm gear 8a, in an end portion thereof.

The pair of pins 6d and 6d that are formed on the outer periphery of the conical outer blade 6 to protrude from the pair of notches 2e and 2e formed in the drum 2a to the outer periphery of the drum 2a, the upward and downward movement cam 5 including the double-thread female screw 5a, which is screwed onto the pair of pins 6d and 6d, engraved in the inner periphery thereof, the grain size-adjusting rotary component 7 that includes the engaging groove 7a engaging with the protrusion portion 5b formed on the outer periphery of the upward and downward movement cam 5 and the worm wheel 7b, formed on the outer periphery thereof, and the grain size-adjusting and setting member 8 in which the worm gear 8a screwed onto the worm wheel 7b is formed form a gap adjusting mechanism that adjusts the size of the gap formed between the blade 4a of the conical inner blade 4 and the opposing blade 6b of the conical outer blade 6.

According to the coffee bean grinding mechanism 1 of the present embodiment described above, the guiding protrusion portions 6c protruding from the outer periphery of the conical outer blade 6 engage with the guiding recessed portions 2d formed in the drum 2a, so that the rotation of the conical outer blade 6 is fixed, and as the rotary shaft 9 rotates, the conical inner blade 4 and the rotary vane 3 rotate, so that the conical inner blade 4 relatively rotates with respect to the conical outer blade 6. Therefore, the coffee beans falling into the gap between the conical inner blade 4 and the conical outer blade 6 are ground and milled into powder by the blade 4a formed on the outer peripheral inclined surface of the conical inner blade 4 and the opposing blade 6b formed on the inner periphery of the cylindrical barrel portion 6a of the conical outer blade 6 to face the blade 4a. The milled coffee beans are swept out to the discharge port 2b, which is connected to the space 2c formed inside the drum 2a, by the rotary vane 3 that is provided in the bottom portion of the conical inner blade 4 to rotate together with the conical inner blade 4 in a state where the bottom surface of the rotary vane 3 adjoins the bottom surface of the drum 2a.

The coarseness to which the coffee beans are milled, namely, the grain size of the milled beans is adjusted by adjusting the size of the gap between the conical inner blade 4 and the conical outer blade 6 using the gap adjusting mechanism. Namely, the worm gear 8a formed in the grain size-adjusting and setting member 8 is rotated, so that the grain size-adjusting rotary component 7 including the worm wheel 7b, which is screwed to the worm gear 8a, formed on the outer periphery thereof rotates around the drum 2a by an amount corresponding to the rotation amount of the worm gear 8a. When the worm wheel 7b rotates, also the upward and downward movement cam 5 of which the protrusion portion 5b engages with the engaging groove 7a formed in the outer periphery of the grain size-adjusting rotary component 7 rotates around the drum 2a, together with the grain size-adjusting rotary component 7. Since the double-thread female screw 5a that is screwed onto the pair of pins 6d and 6d formed on the outer periphery of the conical outer blade 6 is engraved in the inner periphery of the upward and downward movement cam 5, when the upward and downward movement cam 5 rotates around the drum 2a, the pair of pins 6d and 6d protruding to the outer periphery of the drum 2a from the pair of notches 2e and 2e formed in the drum 2a move in the direction parallel with the rotary shaft 9 due to the screw action with the double-thread female screw 5a. As a result, the conical outer blade 6 moves in the axial direction of the rotary shaft 9 according to the rotation amount of the upward and downward movement cam 5, namely, the rotation amount and the rotation direction of the worm gear 8a formed on the outer periphery of the grain size-adjusting and setting member 8, to adjust the size of the gap between the conical inner blade 4 and the conical outer blade 6.

The coffee bean grinding mechanism 1 with such a configuration can be simply disassembled. Namely, the grain size-adjusting rotary component 7, the upward and downward movement cam 5, and the conical outer blade 6 can be separated from the drum 2a by setting the grain size-adjusting rotary component 7 and the upward and downward movement cam 5 at the rotation position corresponding to the initial position for adjusting the grain size where the pair of hook portions 2h and 2h do not interfere therewith and moving the grain size-adjusting rotary component 7 and the upward and downward movement cam 5 in the direction parallel with the axis of the rotary shaft 9. In addition, since the conical inner blade 4 and the rotary vane 3 are detachably attached to the rotary shaft 9 by the nut 10, when the nut 10 is rotated to unfasten the nut 10 and the male screw forming portion 9a, the conical inner blade 4 and the rotary vane 3 can be simply removed from the base 2. Therefore, it is possible to simply remove residual milled powder deposited in the drum 2a and milled powder adhering to the components by separating the components from each other. In addition, the coffee bean grinding mechanism 1 can be simply assembled according to a procedure reverse to the disassembling procedure. For this reason, it is possible to provide the coffee bean grinding mechanism 1 without a concern that powder of the coffee beans remains as deposited in the coffee bean grinding mechanism 1 and the powder which has remained to be rotten is mixed with powder of the coffee beans which are normally ground to cause food damage.

In addition, according to the coffee bean grinding mechanism 1 of the present embodiment, since the outer diameter of the gear 14 that transmits power to the rotary shaft 9 is smaller than the outer diameter of the bottom surface of the truncated cone of the conical inner blade 4, the discharge port 2b including the passage, through which the milled powder of the coffee beans falls vertically from the location where the blade 4a on the outer periphery of the bottom surface of the truncated cone of the conical inner blade 4 faces the opposing blade 6b on the inner periphery of the cylindrical barrel portion 6a of the conical outer blade 6, can be provided side by side with the gear 14. Almost all of the milled powder falling onto the bottom surface of the drum 2a is collected around the discharge port 2b by the rotation of the rotary vane 3 of which the vanes 3c protrude from the cylindrical side surface 3b for the tips of the vanes 3c to be close to the inner peripheral wall of the drum 2a and of which the bottom surface adjoins the bottom surface of the drum 2a. Therefore, almost all of the milled powder falling onto the bottom surface of the drum 2a is collected around the discharge port 2b by the rotation of the rotary vane 3, and is reliably swept out to the discharge port 2b by the vanes 3c that overhang to the discharge port 2b. In addition, the milled powder that falls from a portion where the blades 4a and 6b face each other at a location facing the discharge port 2b is directly released to the discharge port 2b as it is.

In the coffee bean grinding mechanism of the related art disclosed in PTL 1, since milled powder discharged from the discharge portion is pushed out via the discharge passage that is formed flat to have a predetermined length, the milled powder is deposited in the discharge passage. However, according to the coffee bean grinding mechanism 1 of the present embodiment, there is no such a discharge passage as in the related art, and thus there is provided the coffee bean grinding mechanism 1 which further reduces a risk that powder of the coffee beans remains as deposited in the coffee bean grinding mechanism 1 and further reduces a concern of causing food damage.

In addition, according to the coffee bean grinding mechanism 1 of the present embodiment, only when the rotation position of the double-thread female screw 5a formed on the inner periphery of the upward and downward movement cam 5 is at the initial position for adjusting the grain size with respect to the pair of pins 6d and 6d formed on the outer periphery of the cylindrical barrel portion 6a of the conical outer blade 6, the grain size-adjusting rotary component 7 is fitted to the drum 2a at the attachment position by the pair of hook portions 2h and 2h provided on the base 2. As the attachment position of the grain size-adjusting rotary component 7 is determined, also the attachment position of the upward and downward movement cam 5 of which the relative position is determined by the grain size-adjusting rotary component 7 is automatically determined. Therefore, no matter who assembles the grain size-adjusting rotary component 7 and the upward and downward movement cam 5 to the base 2, the grain size-adjusting rotary component 7 and the upward and downward movement cam 5 are attached at fixed positions and are attached at the initial position for adjusting the grain size. For this reason, the coffee bean grinding mechanism 1 with improved assemblability is provided.

In addition, according to the coffee bean grinding mechanism 1 of the present embodiment, the rotation of the worm gear 8a formed in the grain size-adjusting and setting member 8 is transmitted to the upward and downward movement cam 5 via the grain size-adjusting rotary component 7. The rotation position of the upward and downward movement cam 5 is found out by reading the scale 5c that is formed on the outer periphery of the upward and downward movement cam 5 and is indicated by the line 2g formed in the base 2. For this reason, it is possible to easily identify the grinding grain size of the coffee beans milled by the coffee bean grinding mechanism 1, and the coffee bean grinding mechanism 1 with improved usability is provided.

In addition, according to the coffee bean grinding mechanism 1 of the present embodiment, as the conical inner blade 4 rotates, the coffee beans falling into the gap between the conical inner blade 4 and the conical outer blade 6 fall along the plurality of spiral grooves 4b that are engraved in the outer peripheral inclined surface of the conical inner blade 4 from the upper side to the lower side. During this falling, the coffee beans are coarsely ground by being interposed between the plurality of first blade 4a1 of the conical inner blade 4 which are formed to protrude at both ends of the spiral groove 4b and the first opposing blade 6b1 that is coarsely formed on the inner periphery of the cylindrical barrel portion 6a of the conical outer blade 6 to face the first blades 4a1. When the coarsely ground coffee beans fall further, the coarsely ground coffee beans are finely milled by being interposed between the plurality of second blades 4a2 that are formed in an inclined manner below the first blades 4a1 of the conical inner blade 4 to be finer than the first blades 4a1 and the second opposing blade 6b2 that is finely formed on the inner periphery of the cylindrical barrel portion 6a of the conical outer blade 6 to face the second blade 4a2. A portion of the finely milled coffee beans which cannot fall from a gap between the second blade 4a2 and the second opposing blade 6b2 is accumulated in the recess 4c having a bowl shape that is connected to the spiral groove 4b formed to bite into the formation region of the second blade 4a2. A discharge force toward the lower side is applied to the milled beans accumulated in the recess 4c by the second opposing blade 6b2 that is finely formed in the conical outer blade 6 to face the recess 4c and the ground coffee beans falling from above, and the milled beans are promptly pushed out from the gap between the second blade 4a2 and the second opposing blade 6b2 by the discharge force.

Furthermore, according to the coffee bean grinding mechanism 1 of the present embodiment, since the second opposing blade 6b2 is formed such that the number of blades is 50 and is 2.5 times 20 which is the number of blades of the first opposing blade 6b1, and is set at a height aligned with the height of the recess 4c of the conical inner blade 4, a relationship in number of blades between the first opposing blade 6b1 and the second opposing blade 6b2 and the height of the second opposing blade 6b2 are optimized.

In the coffee mill of the related art disclosed in PTL 2, powder of the milled bean is clogged between the pressing and crushing portion (36) that is an inclined fine blade formed in the lower portion of the peripheral inclined surface of the male blade (8) and the pressing and crushing portion (39) that is formed in the inclined surface which is increased in an inclined shape in diameter as the inclined surface approaches the lower portion of the female blade (16). Therefore, the discharge amount of the milled beans is small. When a copy model of the coffee mill of the related art disclosed in PTL 2 was manufactured and verified, the number of blades of the pressing and crushing portion (39) of the female blade (16) equivalent to the second opposing blade 6b2 of the present embodiment was 100 and 5.0 times 20 which was the number of blades of the feed blade (38) of the female blade (16) equivalent to the first opposing blade 6b1 of the present embodiment, and the discharge amount of the coffee beans was 0.6 g/sec.

When the coffee bean grinding mechanism 1 of the present embodiment also was actually manufactured and verified, the discharge amount of the coffee beans was 2.4 g/sec and was approximately 4 times 0.6 g/sec which was the discharge amount of the coffee mill of the related art disclosed in PTL 2. In this case, the blade height of the second opposing blade 6b2 was 2 times the height of the pressing and crushing portion (39) of the female blade (16) equivalent to the second opposing blade 6b2. Namely, according to the coffee bean grinding mechanism 1 of the present embodiment, as described above, powder of the milled beans that cannot fall from the gap between the second blade 4a2 and the second opposing blade 6b2 is promptly pushed out to the discharge port 2b by the discharge force applied to the milled beans accumulated in the recess 4c connected to the spiral groove 4b; and thereby, it is possible to increase the discharge amount of the milled beans without experiencing clogging as with the coffee mill disclosed in PTL 2. In addition, it is possible to further increase the discharge amount of the milled beans by optimizing the relationship in number of blades between the first opposing blade 6b1 and the second opposing blade 6b2 and the height of the second opposing blade 6b2.

In addition, in the coffee mill disclosed in PTL 2, the male blade (8) is fixed to the inside of the outer cylinder (3) and the female blade (16) is fixed to the inside of the inner cylinder (5). Therefore, the rotation centers of the male blade (8) and the female blade (16) are fixed and the axes of the outer cylinder (3) and the inner cylinder (5) are eccentric from each other, and thus a gap formed between the male blade (8) and the female blade (16) is formed with a width around the male blade (8) and cannot be reduced to the width or less. In addition, also in the coffee mill disclosed in PTL 3, the mill (26) is fixed to the drive shaft (24) that is connected to the output shaft (18) of the geared motor (16) via the coupling (20). The side mill (28) is fixed to the opening portion at the lower end of the cone (14) to face the periphery of the mill (26). Therefore, the rotation centers of the mill (26) and the side mill (28) are fixed and the axes of the drive shaft (24) and the side mill (28) are eccentric from each other, and thus a gap formed between the mill (26) and the side mill (28) is formed with a width around the mill (26) and cannot be reduced to the width or less.

However, in the coffee bean grinding mechanism 1 of the present embodiment, the conical outer blade 6 is accommodated and attached inside the drum 2a without being fixed, and can move freely due to the predetermined gap formed between the outer periphery of the conical outer blade 6 and the inner periphery of the drum 2a. Therefore, the position of the conical outer blade 6 can be changed inside the drum 2a to coincide with the rotation center of the conical inner blade 4. For this reason, according to the coffee bean grinding mechanism 1 of the present embodiment, the rotation centers of the conical outer blade 6 and the conical inner blade 4 coincide with each other due to self-alignment of the conical outer blade 6 with respect to the conical inner blade 4; and thereby, it is possible to reduce the gap formed between the inner periphery of the conical outer blade 6 and the outer periphery of the conical inner blade 4. As a result, in the coffee bean grinding mechanism 1 of the present embodiment, it is possible to more finely mill the coffee beans.

When verification was performed on a copy model of the coffee mill of the related art disclosed PTL 2 in which an outer periphery of the female blade (16) and an inner periphery of the inner cylinder (5) were fixed together and there was no gap therebetween, the maximum grain size of powder of the milled coffee beans was 400 pm. Meanwhile, in the coffee bean grinding mechanism 1 of the present embodiment, when verification was performed in a state where the size of the gap formed between the outer periphery of the conical outer blade 6 and the inner periphery of the drum 2a was set to approximately 0.1 mm, the maximum grain size of the milled coffee beans was 250 µm. Namely, it was confirmed that according to the coffee bean grinding mechanism 1 of the present embodiment, the coffee beans could be more finely milled than with the coffee mill of the related art disclosed in PTL 2.

In addition, according to the coffee bean grinding mechanism 1 of the present embodiment, the knob 8b is operated with the hand to rotate the worm gear 8a, so that the coarseness to which the coffee beans are milled is manually adjusted. For this reason, adjustment for the grain size of the coffee beans is not limited to adjustment performed by electrically rotating the worm gear 8a, and the coffee bean grinding mechanism 1 with improved operability is provided.

### Reference Signs List

1: Coffee bean grinding mechanism
2: Base
2a: Drum
2b: Discharge port
2c: Space
2d: Guiding recessed portion
2e: Notch
2f: Engaging protrusion
2g: Line (Indicator)
2h: Hook portion
2i: Groove
2j: Discharge member-connecting portion
3: Rotary vane
3a: Engaging protrusion
3b: Cylindrical side surface
3c: Vane
4: Conical inner blade
4a: Blade
4a1: First blade
4a2: Second blade
4b: Spiral groove
4c: Recess
5: Upward and downward movement cam
5a: Double-thread female screw
5b: Protrusion portion
5c: Scale
6: Conical outer blade
6a: Cylindrical barrel portion
6b: Opposing blade
6b1: First opposing blade
6b2: Second opposing blade
6c: Guiding protrusion portion
6d: Pin
7: Grain size-adjusting rotary component
7a: Engaging groove
7b: Worm wheel
7c: Step portion
8: Grain size-adjusting and setting member
8a: Worm gear
8b: Knob
9: Rotary shaft
9a: Male screw forming portion
10: Nut
11: Motor
11a: Output shaft
12: Discharge member
12a: Latch piece
13: Speed reduction gear mechanism
14: Gear

## Claims

1. A coffee bean grinding mechanism (1) comprising:
a conical inner blade (4) including a blade (4a) formed on an outer peripheral inclined surface of a cone of which a top is cut off;
a conical outer blade (6) in which an opposing blade (6b) is formed on an inner periphery of a cylindrical barrel portion (6a), which covers a periphery of the blade (4a), to face the blade (4a) with a predetermined gap therebetween;
a gap adjusting mechanism that adjusts a size of the gap;
a rotation drive mechanism that rotates the conical inner blade (4) and the conical outer blade (6) relative to each other to grind a coffee bean, which falls into the gap, to a grain size corresponding to the size of the gap;
a discharge port (2b) that discharges the ground coffee bean; and
a rotary vane (3) that rotates together with the conical inner blade (4) to sweep out the ground coffee bean to the discharge port (2b),
**characterized in that** the coffee bean grinding mechanism (1) further comprises:
a base (2) in which a drum (2a) having a cylindrical shape is formed to have a space (2c) that surrounds a periphery of the conical inner blade (4) and the rotary vane (3) provided in a bottom portion of the conical inner blade (4) and is connected to the discharge port (2b), the conical inner blade (4) and the rotary vane (3) are detachably attached to a rotary shaft (9) penetrating through a center of a bottom surface of the drum (2a) in a state where a bottom surface of the rotary vane (3) adjoins the bottom surface of the drum (2a), and a guiding protrusion portion (6c) protruding from an outer periphery of the conical outer blade (6) engages with a guiding recessed portion (2d) formed in the drum (2a) to be parallel with an axis of the rotary shaft (9) to thereby cause the conical outer blade (6) to be accommodated in the drum (2a) to be movable in an axial direction;
an upward and downward movement cam (5) which has a ring shape that is rotatably fitted to an outer periphery of the drum (2a), in which a female screw (5a), which is screwed onto a pin (6d) that is formed on the outer periphery of the conical outer blade (6) to protrude to the outer periphery of the drum (2a) from a notch (2e) formed in the drum (2a) to be parallel with the axis when the upward and downward movement cam (5) is fitted to the outer periphery of the drum (2a), is engraved in an inner periphery of the upward and downward movement cam (5), which moves the conical outer blade (6) in the axial direction to change the size of the gap when the pin (6d) that rotates to be screwed into the female screw (5a) moves due to screw action, and in which a protrusion portion (5b) protruding in parallel with the axis is formed on an outer periphery of the upward and downward movement cam (5);
a grain size-adjusting rotary component (7) which has a cylindrical shape that is rotatably fitted to the outer periphery of the drum (2a) and is mounted on the upward and downward movement cam (5) fitted to the outer periphery of the drum (2a), in which an engaging groove (7a) engaging with the protrusion portion (5b) formed on the outer periphery of the upward and downward movement cam (5) and a worm wheel (7b), which is formed of teeth engraved in a direction parallel with the axis to be arranged in a circumferential direction, is formed on an outer periphery of the grain size-adjusting rotary component (7), and which rotates together with the upward and downward movement cam (5) when the protrusion portion (5b) engages with the engaging groove (7a); and
a grain size-adjusting and setting member (8) which is provided in the base (2) at a position adjacent to the drum (2a) and in which a worm gear (8a) screwed onto the worm wheel (7b) is formed.

2. The coffee bean grinding mechanism (1) according to claim 1, further comprising:
a gear (14) that is provided coaxially with the rotary shaft (9) below the drum (2a) to transmit power to the rotary shaft (9), and has a smaller outer diameter than an outer diameter of a bottom surface of the cone of the conical inner blade (4),
wherein the discharge port (2b) includes a passage, through which milled powder of the coffee bean falls vertically from a location where the blade (4a) on an outer periphery of the bottom surface of the cone faces the opposing blade (6b) on the inner periphery of the cylindrical barrel portion (6a) of the conical outer blade (6), arranged side by side with the gear (14), and
a plurality of vanes (3c) are provided on an outer periphery of a cylindrical side surface (3b) of the rotary vane (3) having an outer diameter which is the same as the outer periphery of the bottom surface of the cone and at which the cylindrical side surface (3b) is aligned with a gear (14) side inner wall of the passage or exceeds a formation position of the gear (14) side inner wall, or an outer diameter which is smaller than the outer periphery of the bottom surface of the cone and at which the cylindrical side surface (3b) is aligned with the gear (14) side inner wall of the passage or exceeds the formation position of the gear (14) side inner wall, to protrude toward an inner peripheral wall of the drum (2a) with a predetermined interval therebetween for tips of the vanes (3c) to be close to the inner peripheral wall of the drum (2a) and to overhang to the discharge port (2b).

3. The coffee bean grinding mechanism (1) according to claim 1 or 2,
wherein a step portion (7c) in which the engaging groove (7a) is formed of a discontinued part and the worm wheel (7b) are formed to protrude in an arc shape at a predetermined position in the circumferential direction and at a predetermined height in the axial direction on an outer periphery of the grain size-adjusting rotary component (7),
when the protrusion portion (5b) engages with the engaging groove (7a), a relative position of the upward and downward movement cam (5) with respect to the grain size-adjusting rotary component (7) is defined, and
the coffee bean grinding mechanism (1) further comprises a pair of hook portions (2h) that are provided spaced apart from each other to protrude from the base (2) in the vicinity of the outer periphery of the drum (2a), to allow the grain size-adjusting rotary component (7) to pass without interfering with the step portion (7c) and the worm wheel (7b) to be fitted to an attachment position only when a rotation position of the female screw (5a) formed on the inner periphery of the upward and downward movement cam (5) is at an initial position for adjusting a grain size with respect to the pin (6d) formed on the outer periphery of the cylindrical barrel portion (6a) of the conical outer blade (6) at an event where the grain size-adjusting rotary component (7) is fitted to the outer periphery of the drum (2a), and to interpose the step portion (7c) and the worm wheel (7b) between grooves (2i), which are formed in side surfaces of the hook portions (2h) at a predetermined height in the axial direction by cutoff, when the grain size-adjusting rotary component (7) is fitted to the attachment position to rotate.

4. The coffee bean grinding mechanism (1) according to any one of claims 1 to 3,
wherein a scale (5c) representing a grinding grain size of the coffee bean is formed on the outer periphery of the upward and downward movement cam (5), and an indicator (2g) indicating a scale corresponding to a current grinding grain size of the coffee bean is formed in the base (2).

5. The coffee bean grinding mechanism (1) according to any one of claims 1 to 4,
wherein the blade (4a) of the conical inner blade (4) includes a plurality of first blades (4a1) that are formed to protrude at both ends of a plurality of spiral grooves (4b) which are engraved on the outer peripheral inclined surface of the cone from an upper side to a lower side and a plurality of second blades (4a2) that are formed in an inclined manner on the lower side of the outer peripheral inclined surface to be finer than the first blade (4a1), a trailing end on a second blade (4a2) side of the spiral groove (4b) bites into a formation region of the second blade (4a2), and a recess (4c) connected to the spiral groove (4b) is formed in the bitten formation region of the second blade (4a2), and
the opposing blade (6b) of the conical outer blade (6) includes a first opposing blade (6b1) that is coarsely formed on the inner periphery of the cylindrical barrel portion (6a) covering a periphery of the first blade (4a1), to face the first blade (4a1) with a predetermined gap therebetween, and a second opposing blade (6b2) that is finely formed on the inner periphery of the cylindrical barrel portion (6a) covering a periphery of the second blade (4a2), to face the second blade (4a2) with a predetermined gap therebetween.

6. The coffee bean grinding mechanism (1) according to claim 5,
wherein the second opposing blade (6b2) of the conical outer blade (6) is formed to have the number of blades which is approximately 2.5 times the number of blades of the first opposing blade (6b1), and has a height aligned with a height of the recess (4c) .

7. The coffee bean grinding mechanism (1) according to any one of claims 1 to 6,
wherein a predetermined gap is formed between the outer periphery of the conical outer blade (6) and an inner periphery of the drum (2a).

8. The coffee bean grinding mechanism (1) according to any one of claims 1 to 7,
wherein the grain size-adjusting and setting member (8) includes a knob (8b), which rotates the worm gear (8a), in an end portion thereof.

## Patentansprüche

1. Kaffeebohnen-Mahlmechanismus (1), umfassend:
eine konische Innenklinge (4), die eine Klinge (4a) umfasst, die an einer geneigten Außenumfangsfläche eines Kegels ausgebildet ist, von dem eine Spitze abgeschnitten ist,
eine konische Außenklinge (6), bei der eine Gegenklinge (6b) an einem Innenumfang eines zylindrischen Trommelabschnitts (6a) ausgebildet ist, der eine Peripherie der Klinge (4a) bedeckt, so dass er der Klinge (4a) mit einer vorgegebenen Lücke dazwischen zugewandt ist,
einen Lückeneinstellmechanismus, der eine Größe der Lücke einstellt,
einen Rotationsantriebsmechanismus, der die konische Innenklinge (4) und die konische Außenklinge (6) relativ zueinander dreht, so dass eine Kaffeebohne, die in die Lücke fällt, auf eine Korngröße gemahlen wird, die der Größe der Lücke entspricht,
eine Abgabeöffnung (2b), die die gemahlene Kaffeebohne abgibt, und
einen Drehflügel (3), der sich zusammen mit der konischen Innenklinge (4) dreht, so dass die gemahlene Kaffeebohne zur Abgabeöffnung (2b) getrieben wird,
**dadurch gekennzeichnet, dass** der Kaffeebohnen-Mahlmechanismus (1) ferner umfasst:
eine Basis (2), in der eine Trommel (2a) mit einer zylindrischen Form so ausgebildet ist, dass sie einen Raum (2c) aufweist, der einen Umfang der konischen Innenklinge (4) und den Drehflügel (3), der in einem Bodenabschnitt der konischen Innenklinge (4) vorgesehen ist, umgibt und mit der Abgabeöffnung (2b) verbunden ist, wobei die konische Innenklinge (4) und der Drehflügel (3) lösbar an einer Drehwelle (9) befestigt sind, die durch eine Mitte einer Bodenfläche der Trommel (2a) in einem Zustand hindurchtritt, in dem eine Bodenfläche des Drehflügels (3) an die Bodenfläche der Trommel (2a) angrenzt, und ein Führungsvorsprungsabschnitt (6c), der von einem Außenumfang der konischen Außenklinge (6) vorspringt, in einen Führungsvertiefungsabschnitt (2d) eingreift, der in der Trommel (2a) so ausgebildet ist, dass er parallel zu einer Achse der Drehwelle (9) ist, um dadurch zu bewirken, dass die konische Außenklinge (6) in der Trommel (2a) aufgenommen wird, so dass sie in axialer Richtung beweglich ist,
einen Aufwärts- und Abwärtsbewegungsnocken (5), der eine Ringform aufweist, der drehbar an einem Außenumfang der Trommel (2a) angebracht ist, wobei ein Innengewinde (5a), das auf einen Stift (6d) geschraubt ist, am Außenumfang der konischen Außenklinge (6) ausgebildet ist, so dass er zum Außenumfang der Trommel (2a) von einer Kerbe (2e) vorsteht, die in der Trommel (2a) ausgebildet ist, so dass sie parallel zur Achse verläuft, wenn der Aufwärts- und Abwärtsbewegungsnocken (5) am Außenumfang der Trommel (2a) angebracht ist, in einem Innenumfang des Aufwärts- und Abwärtsbewegungsnockens (5) eingeprägt ist, welcher die konische Außenklinge (6) in axialer Richtung bewegt, so dass die Größe der Lücke geändert wird, wenn sich der Stift (6d), der sich so dreht, dass er in das Innengewinde (5a) geschraubt wird, aufgrund der Schraubwirkung bewegt, und wobei ein Vorsprungsabschnitt (5b), der parallel zu der Achse vorsteht, an einem Außenumfang des Aufwärts- und Abwärtsbewegungsnockens (5) ausgebildet ist,
eine Korngrößeneinstelldrehkomponente (7), die eine zylindrische Form aufweist, die drehbar an dem Außenumfang der Trommel (2a) angebracht ist und auf dem Aufwärts- und Abwärtsbewegungsnocken (5) befestigt ist, der an dem Außenumfang der Trommel (2a) angebracht ist, wobei eine Eingriffsnut (7a), die mit dem Vorsprungsabschnitt (5b) in Eingriff steht, der an dem Außenumfang des Aufwärts- und Abwärtsbewegungsnockens (5) ausgebildet ist, und ein Schneckenrad (7b), das aus Zähnen ausgebildet ist, die in einer Richtung parallel zu der Achse eingeprägt sind, so dass sie in einer Umfangsrichtung angeordnet sind, an einem Außenumfang der Korngrößeneinstelldrehkomponente (7) ausgebildet sind, und die sich zusammen mit dem Aufwärts- und Abwärtsbewegungsnocken (5) dreht, wenn der Vorsprungsabschnitt (5b) in die Eingriffsnut (7a) eingreift, und
ein Korngrößeneinstellelement (8), das in der Basis (2) an einer Position neben der Trommel (2a) vorgesehen ist und bei dem ein Schneckenzahnrad (8a) ausgebildet ist, welches auf das Schneckenrad (7b) aufgeschraubt ist.

2. Kaffeebohnen-Mahlmechanismus (1) nach Anspruch 1, ferner umfassend:
ein Zahnrad (14), das koaxial mit der Drehwelle (9) unterhalb der Trommel (2a) vorgesehen ist, um Kraft auf die Drehwelle (9) zu übertragen, und einen kleineren Außendurchmesser aufweist als ein Außendurchmesser einer Bodenfläche des Kegels der konischen Innenklinge (4),
wobei die Abgabeöffnung (2b) einen Durchgang umfasst, durch den gemahlenes Pulver der Kaffeebohne vertikal von einer Stelle fällt, an der die Klinge (4a) an einem Außenumfang der Bodenfläche des Konus der Gegenklinge (6b) am Innenumfang des zylindrischen Trommelabschnitts (6a) der konischen Außenklinge (6) zugewandt ist, Seite an Seite mit dem Zahnrad (14) angeordnet, und
eine Vielzahl von Flügeln (3c) an einem Außenumfang einer zylindrischen Seitenfläche (3b) des Drehflügels (3) vorgesehen sind, der einen Außendurchmesser aufweist, der gleich ist wie der Außenumfang der Bodenfläche des Konus, und an dem die zylindrische Seitenfläche (3b) mit einer Seiteninnenwand des Zahnrads (14) des Durchgangs ausgerichtet ist oder eine Ausbildungsposition der Seiteninnenwand des Zahnrads (14) überschreitet, oder einen Außendurchmesser, der kleiner ist als der Außenumfang der Bodenfläche des Konus, und an dem die zylindrische Seitenfläche (3b) mit der Seiteninnenwand des Zahnrads (14) des Durchgangs ausgerichtet ist oder eine Ausbildungsposition der Seiteninnenwand des Zahnrads (14) überschreitet, so dass eine innere Umfangswand der Trommel (2a) mit einem vorgegebenen Abstand dazwischen vorsteht, damit die Spitzen der Flügel (3c) nahe an der inneren Umfangswand der Trommel (2a) liegen und über die Abgabeöffnung (2b) hinausragen.

3. Kaffeebohnen-Mahlmechanismus (1) nach Anspruch 1 oder 2,
wobei ein Stufenabschnitt (7c), in dem die Eingriffsnut (7a) aus einem unterbrochenen Teil ausgebildet ist, und das Schneckenrad (7b) so ausgebildet sind, dass sie in einer Bogenform an einer vorgegebenen Position in der Umfangsrichtung und in einer vorgegebenen Höhe in der axialen Richtung an einem Außenumfang der Korngrößeneinstelldrehkomponente (7) vorstehen,
wenn der Vorsprungsabschnitt (5b) in die Eingriffsnut (7a) eingreift, eine relative Position des Aufwärts- und Abwärtsbewegungsnockens (5) in Bezug auf die Korngrößeneinstelldrehkomponente (7) definiert ist und
der Kaffeebohnenmahlmechanismus (1) ferner ein Paar Hakenabschnitte (2h) umfasst, die voneinander beabstandet vorgesehen sind, so dass sie von der Basis (2) in der Nähe des Außenumfangs der Trommel (2a) vorzustehen, um zu ermöglichen, dass die Korngrößeneinstelldrehkomponente (7) vorbeigelangt, ohne den Stufenabschnitt (7c) und das Schneckenrad (7b) zu behindern, um an einer Befestigungsposition nur dann angebracht zu werden, wenn eine Drehposition des Innengewindes (5a), das an dem Innenumfang des Aufwärtsund Abwärtsbewegungsnockens (5) ausgebildet ist, in einer Anfangsposition zum Einstellen einer Korngröße in Bezug auf den Stift (6d), der an dem Außenumfang des zylindrischen Trommelabschnitts (6a) der konischen Außenklinge (6) ausgebildet ist, in einem Fall, bei dem die Korngrößeneinstelldrehkomponente (7) an dem Außenumfang der Trommel (2a) angebracht ist, und um den Stufenabschnitt (7c) und das Schneckenrad (7b) zwischen Hohlkehlen (2i) einzufügen, die in Seitenflächen der Hakenabschnitte (2h) in einer vorgegebenen Höhe in der axialen Richtung durch Abschneiden ausgebildet sind, wenn die Korngrößeneinstelldrehkomponente (7) an der Befestigungsposition drehbar angebracht ist.

4. Kaffeebohnen-Mahlmechanismus (1) nach einem der Ansprüche 1 bis 3, wobei eine Skala (5c), die eine Mahlkorngröße der Kaffeebohne angibt, am Außenumfang der Aufwärts- und Abwärtsbewegungsnocke (5) ausgebildet ist und ein Indikator (2g), der eine Skala anzeigt, die einer aktuellen Mahlkorngröße der Kaffeebohne entspricht, in der Basis (2) ausgebildet ist.

5. Kaffeebohnen-Mahlmechanismus (1) nach einem der Ansprüche 1 bis 4,
wobei die Klinge (4a) der konischen Innenklinge (4) mehrere erste Klingen (4a1) umfasst, die so ausgebildet sind, dass sie an beiden Enden einer Vielzahl von Spiralkehlen (4b) vorstehen, die auf der geneigten Außenumfangsfläche des Kegels von einer oberen Seite zu einer unteren Seite eingeprägt sind, und eine Vielzahl von zweiten Klingen (4a2), die mit Neigung auf der unteren Seite der geneigten Außenumfangsfläche ausgebildet sind, so dass sie feiner sind als die erste Klinge (4a1), ein hinteres Ende auf einer Seite der zweiten Klinge (4a2) der Spiralkehle (4b) in einen Ausbildungsbereich der zweiten Klinge (4a2) eingreift und eine Aussparung(4c), die mit der Spiralkehle (4b) verbunden ist, im eingegriffenen Ausbildungsbereich der zweiten Klinge (4a2) ausgebildet ist und
die Gegenklinge (6b) der konischen Außenklinge (6) eine erste Gegenklinge (6b1) umfasst, die grob am Innenumfang des zylindrischen Trommelabschnitts (6a) ausgebildet ist, der einen Umfang der ersten Klinge (4a1) abdeckt, so dass sie der ersten Klinge (4a1) mit einer vorgegebenen Lücke dazwischen zugewandt ist, und eine zweite Gegenklinge (6b2), die fein am Innenumfang des zylindrischen Trommelabschnitts (6a) ausgebildet ist, der einen Umfang der zweiten Klinge (4a2) abdeckt, so dass sie der zweiten Klinge (4a2) mit einer vorgegebenen Lücke dazwischen zugewandt ist.

6. Kaffeebohnen-Mahlmechanismus (1) nach Anspruch 5, wobei die zweite Gegenklinge (6b2) der konischen Außenklinge (6) so ausgebildet ist, dass sie eine Anzahl von Klingen aufweist, die ungefähr das 2,5-fache der Anzahl von Klingen der ersten Gegenklinge (6b1) beträgt, und eine Höhe aufweist, die mit einer Höhe der Vertiefung (4c) angeglichen ist.

7. Kaffeebohnen-Mahlmechanismus (1) nach einem der Ansprüche 1 bis 6, wobei eine vorgegebene Lücke zwischen dem Außenumfang der konischen Außenklinge (6) und einem Innenumfang der Trommel (2a) ausgebildet ist.

8. Kaffeebohnen-Mahlmechanismus (1) nach einem der Ansprüche 1 bis 7, wobei das Korngrößeneinstellelement (8) einen Knopf (8b), der das Schneckenrad (8a) dreht, in einem Endabschnitt davon enthält.

## Revendications

1. Mécanisme de mouture de grains de café (1) comprenant :
une lame intérieure conique (4) comprenant une lame (4a) formée sur une surface inclinée périphérique extérieure d'un cône dont un sommet est coupé ;
une lame extérieure conique (6) dans laquelle une lame opposée (6b) est formée sur une périphérie intérieure d'une partie de fût cylindrique (6a) qui couvre une périphérie de la lame (4a), ladite lame extérieure conique faisant face à la lame (4a) en ayant un interstice prédéterminé entre lesdites lames ;
un mécanisme d'ajustement d'interstice qui ajuste une taille de l'interstice ;
un mécanisme d'entraînement en rotation qui fait tourner la lame intérieure conique (4) et la lame extérieure conique (6) l'une par rapport à l'autre, afin de moudre un grain de café, qui tombe dans l'interstice, à une taille de grain correspondant à la taille de l'interstice ;
un orifice d'évacuation (2b) qui évacue le grain de café moulu ; et
une palette rotative (3) qui tourne en même temps que la lame intérieure conique (4), afin de balayer le grain de café moulu jusqu'à l'orifice d'évacuation (2b),
**caractérisé en ce que** le mécanisme de mouture de grains de café (1) comprend en outre :
une base (2) dans laquelle un tambour (2a) ayant une forme cylindrique est formé pour avoir un espace (2c) qui entoure une périphérie de la lame intérieure conique (4) et de la palette rotative (3) prévue dans une partie inférieure de la lame intérieure conique (4), ledit tambour étant relié à l'orifice d'évacuation (2b), la lame intérieure conique (4) et la palette rotative (3) sont fixées de manière amovible à un arbre rotatif (9) pénétrant à travers un centre d'une surface inférieure du tambour (2a), dans un état où une surface inférieure de la palette rotative (3) est contiguë à la surface inférieure du tambour (2a), et une partie saillante de guidage (6c) faisant saillie par rapport à une périphérie extérieure de la lame extérieure conique (6) s'engage dans une partie évidée de guidage (2d) formée dans le tambour (2a) afin d'être parallèle à un axe de l'arbre rotatif (9), amenant ainsi la lame extérieure conique (6) à être logée dans le tambour (2a) afin d'être mobile dans une direction axiale ;
une came (5) de mouvement vers le haut et vers le bas, came qui a une forme annulaire qui est montée en rotation sur une périphérie extérieure du tambour (2a), came dans laquelle une vis femelle (5a) qui est vissée sur une goupille (6d) qui est formée sur la périphérie extérieure de la lame extérieure conique (6) pour dépasser de la périphérie extérieure du tambour (2a) en faisant saillie par rapport à une encoche (2e) formée dans le tambour (2a), afin d'être parallèle à l'axe quand la came (5) de mouvement vers le haut et vers le bas est montée sur la périphérie extérieure du tambour (2a), ladite vis femelle étant gravée dans une périphérie intérieure de la came (5) de mouvement vers le haut et vers le bas, came qui déplace la lame extérieure conique (6) dans la direction axiale, afin de modifier la taille de l'interstice lorsque la goupille (6d), qui tourne pour être vissée dans la vis femelle (5a), se déplace en raison de l'action de la vis, et came dans laquelle une partie saillante (5b) faisant saillie parallèlement à l'axe est formée sur une périphérie extérieure de la came (5) de mouvement vers le haut et vers le bas ;
un composant rotatif (7) d'ajustement de la taille des grains, composant rotatif qui a une forme cylindrique qui est ajustée en rotation sur la périphérie extérieure du tambour (2a) et est montée sur la came (5) de mouvement vers le haut et vers le bas ajustée sur la périphérie extérieure du tambour (2a), composant rotatif dans lequel une rainure d'engagement (7a) engage la partie saillante (5b) formée sur la périphérie extérieure de la came (5) de mouvement vers le haut et vers le bas, et composant rotatif qui a une roue à vis sans fin (7b) qui est formée de dents gravées dans une direction parallèle à l'axe devant être disposé dans une direction circonférentielle et qui est formée sur une périphérie extérieure du composant rotatif (7) d'ajustement de la taille des grains, ladite roue à vis sans fin tournant en même temps que la came (5) de mouvement vers le haut et vers le bas quand la partie saillante (5b) s'engage dans la rainure d'engagement (7a) ; et
un élément d'ajustement et de réglage (8) de la taille des grains qui est prévu dans la base (2) au niveau d'une position adjacente au tambour (2a) et élément d'ajustement et de réglage dans lequel est formé un engrenage à vis sans fin (8a) vissé sur la roue à vis sans fin (7b).

2. Mécanisme de mouture de grains de café (1) selon la revendication 1, comprenant en outre :
un engrenage (14) qui est prévu sous le tambour (2a) en étant placé coaxialement par rapport à l'arbre rotatif (9), afin de transmettre de la puissance à l'arbre rotatif (9), ledit engrenage ayant un diamètre extérieur plus petit qu'un diamètre extérieur d'une surface inférieure du cône de la lame intérieure conique (4),
mécanisme de mouture dans lequel l'orifice d'évacuation (2b) comprend un passage à travers lequel de la poudre moulue du grain de café tombe verticalement à partir d'un endroit où la lame (4a) se trouvant sur une périphérie extérieure de la surface inférieure du cône fait face à la lame opposée (6b) se trouvant sur la périphérie intérieure de la partie de fût cylindrique (6a) de la lame extérieure conique (6), lesdites lames étant disposées côte à côte avec l'engrenage (14), et
une pluralité de palettes (3c) est prévue sur une périphérie extérieure d'une surface latérale cylindrique (3b) de la palette rotative (3) ayant un diamètre extérieur qui est le même que la périphérie extérieure de la surface inférieure du cône, et palette rotative sur laquelle la surface latérale cylindrique (3b) est alignée sur une paroi intérieure latérale d'engrenage (14) du passage ou dépasse d'une position de formation de la paroi intérieure latérale d'engrenage (14), ou bien ayant un diamètre extérieur qui est plus petit que la périphérie extérieure de la surface inférieure du cône, et palette rotative sur laquelle la surface latérale cylindrique (3b) est alignée sur la paroi intérieure latérale d'engrenage (14) du passage ou dépasse de la position de formation de la paroi intérieure latérale d'engrenage (14), pour être en saillie vers une paroi périphérique intérieure du tambour (2a) avec un intervalle prédéterminé entre lesdites parois, pour que des pointes des palettes (3c) soient proches de la paroi périphérique intérieure du tambour (2a) et en surplomb par rapport à l'orifice d'évacuation (2b).

3. Mécanisme de mouture de grains de café (1) selon la revendication 1 ou 2,
dans lequel une partie en gradin (7c), dans laquelle la rainure d'engagement (7a) est formée d'une partie discontinue, et la roue à vis sans fin (7b), sont formées pour être en saillie en forme d'arc au niveau d'une position prédéterminée dans la direction circonférentielle et au niveau d'une hauteur prédéterminée dans la direction axiale sur une périphérie extérieure du composant rotatif (7) d'ajustement de la taille des grains,
quand la partie saillante (5b) s'engage dans la rainure d'engagement (7a), une position relative de la came (5) de mouvement vers le haut et vers le bas, par rapport au composant rotatif (7) d'ajustement de la taille des grains, est définie, et
le mécanisme de mouture de grains de café (1) comprend en outre une paire de parties formant crochets (2h) qui sont prévus en étant espacés l'un de l'autre pour être en saillie par rapport à la base (2) à proximité de la périphérie extérieure du tambour (2a), afin de permettre au composant rotatif (7) d'ajustement de la taille des grains de passer sans interférer avec la partie en gradin (7c), et de permettre à la roue à vis sans fin (7b) d'être montée sur une position de fixation seulement quand une position de rotation de la vis femelle (5a) formée sur la périphérie intérieure de la came (5) de mouvement vers le haut et vers le bas est au niveau d'une position initiale, afin d'ajuster une taille de grain par rapport à la goupille (6d) formée sur la périphérie extérieure de la partie de fût cylindrique (6a) de la lame extérieure conique (6), au moment où le composant rotatif (7) d'ajustement de la taille des grains est monté sur la périphérie extérieure du tambour (2a), et afin d'interposer la partie en gradin (7c) et la roue à vis sans fin (7b) entre des rainures (2i) qui sont formées, par découpe, dans des surfaces latérales des parties formant crochets (2h) au niveau d'une hauteur prédéterminée dans la direction axiale, quand le composant rotatif (7) d'ajustement de la taille des grains est monté sur la position de fixation afin de tourner.

4. Mécanisme de mouture de grains de café (1) selon l'une quelconque des revendications 1 à 3,
dans lequel une graduation (5c) représentant une taille de grain de mouture du grain de café est formée sur la périphérie extérieure de la came (5) de mouvement vers le haut et vers le bas, et un indicateur (2g) indiquant une graduation correspondant à une taille du grain de café au moment d'une mouture en cours est formé dans la base (2).

5. Mécanisme de mouture de grains de café (1) selon l'une quelconque des revendications 1 à 4,
dans lequel la lame (4a) de la lame intérieure conique (4) comprend une pluralité de premières lames (4a1) qui sont formées pour être en saillie aux deux extrémités d'une pluralité de rainures en spirale (4b) qui sont gravées sur la surface inclinée périphérique extérieure du cône, à partir d'un côté supérieur jusqu'à un côté inférieur, et comprend une pluralité de deuxièmes lames (4a2) qui sont formées de manière inclinée sur le côté inférieur de la surface inclinée périphérique extérieure, pour être plus fines que la première lame (4a1), une extrémité arrière sur un côté de deuxième lame (4a2) de la rainure en spirale (4b) mord dans une région de formation de la deuxième lame (4a2), et un évidement (4c) relié à la rainure en spirale (4b) est formé dans la région de formation mordue de la deuxième lame (4a2), et
la lame opposée (6b) de la lame extérieure conique (6) comprend une première lame opposée (6b1) qui est grossièrement formée sur la périphérie intérieure de la partie de fût cylindrique (6a) couvrant une périphérie de la première lame (4a1), afin de faire face à la première lame (4a1) avec un interstice prédéterminé entre lesdites lames, et comprend une deuxième lame opposée (6b2) qui est formée finement sur la périphérie intérieure de la partie de fût cylindrique (6a) couvrant une périphérie de la deuxième lame (4a2), afin de faire face à la deuxième lame (4a2) avec un interstice prédéterminé entre lesdites lames.

6. Mécanisme de mouture de grains de café (1) selon la revendication 5,
dans lequel la deuxième lame opposée (6b2) de la lame extérieure conique (6) est formée pour avoir le nombre de lames qui est approximativement égal à 2,5 fois le nombre de lames de la première lame opposée (6b1), et a une hauteur alignée sur une hauteur de l'évidement (4c).

7. Mécanisme de mouture de grains de café (1) selon l'une quelconque des revendications 1 à 6,
dans lequel un interstice prédéterminé est formé entre la périphérie extérieure de la lame extérieure conique (6) et une périphérie intérieure du tambour (2a).

8. Mécanisme de mouture de grains de café (1) selon l'une quelconque des revendications 1 à 7,
dans lequel l'élément d'ajustement et de réglage (8) de la taille des grains comprend un bouton (8b) qui fait tourner l'engrenage à vis sans fin (8a) dans une partie d'extrémité dudit engrenage.
